# EUROPEAN PATENT SPECIFICATION

(11) **EP 1 890 050 B1**
(45) Date of publication and mention of the grant of the patent: **03.03.2010**
(21) Application number: 07253245.0
(22) Date of filing: 17.08.2007
(51) Int. Cl.: F16D 65/12

(54) **Carbon-carbon stator insert for aircraft brakes**
Kohlenstoff-Kohlenstoff-Statoreinsatz für Flugzeugbremsen
Insert de stator carbone-carbone pour freins d'avion

(30) Priority: 18.08.2006 US 505804
(43) Date of publication of application: 20.02.2008
(73) Proprietor: Honeywell International Inc., Morristown NJ 07960 (US)
(72) Inventor: Walker, Terence B., South Bend, IN 46619 (US); Booker, Laurie A., South Bend, IN 46637 (US); Waghray, Akshay, Granger, IN 46530 (US)
(74) Representative: Smee, Anthony James Michael

(56) References cited:
- US-A- 3 934 686
- US-A- 3 972 395
- US-A- 4 837 073
- US-A- 5 273 140

## Description

### Field of the Invention

The field of the present invention generally pertains to carbon friction members for brakes. More particularly, this invention pertains to carbon-carbon composite annular drive inserts which are placed within an annular opening within the brake disk.

### Background of the Invention

In brake assemblies which employ brake discs splined to the wheel and axle, of an aircraft for example, it is important to provide specially constructed drive means to reinforce the peripheral slots in the discs, and relieve the severe stressing that otherwise would rapidly deteriorate the periphery of the discs. Carbon-carbon composite brake discs have improved braking and heat sink characteristics and have become more widely utilized. However, it is important to provide reinforcing inserts at the peripheral slots of the discs because the carbon-carbon composite brake discs have less strength than steel. The problem with the use of metallic inserts is that the inserts are heavy and may negatively impact sliding of the stators on splines of the torque tube.

One solution to the above problems is described in US 5,273,140 in which a drive insert is provided in combination with a brake disc. The disc is generally annular with a central opening, and an edge surface having recesses that extend radially into the disc. The drive insert has a cylindrical body with an opening which extends into the body. The insert opening terminates at an axially extending surface located between the center of the body and an outer surface of the body, and end flanges extending from the body, each of the end flanges extending radially outwardly from the outer surface of the body to provide axial positioning of the drive insert relative to the disc, the body of the annular drive insert located rotatably within said annular recess and retained axially in place by said flanges which may engage opposite side surfaces of the disc.

However, there are two related problems that generally relate to the carbon-carbon disk. The first is excessive slot wear, which causes disks to have to be scrapped prior to refurbishment. A second problem is oxidation of stator lugs due to contamination with potassium acetate runway deicers and nigh operating temperatures.

Accordingly, there is a need in the art for removable carbon-carbon composite inserts with better oxidation resistance and improved strength.

US 3,972,395 describes an oxidation inhibiting cap for a carbon friction disc. The cap comprises a carbon cloth sheath impregnated with oxidation inhibiting materials and is located between drive slots on the periphery of a carbon friction disc.

US 3,934,686 describes a carbon brake disc which has its torque transmitting formations reinforced by filament reinforced carbon inserts which are located in cut-out areas of the disc periphery.

### Summary of the Invention

The present invention is directed to a brake disc in accordance with claim 1.

Further, the invention is directed to a method of protecting a carbon-carbon composite annular drive insert for such a brake disc.

Preferably, the carbon-carbon composite will have been vacuum pressure impregnated with antioxidant solution. With this approach the lug strength and the oxidation resistance can be simultaneously improved. The removable insert allows for replacement if excess wear occurs.

### Brief Description of the Drawings

FIGURE 1 shows an aircraft carbon-carbon composite brake disc with annular drive inserts in accordance with the present invention.

FIGURE 2 is an enlarged view of the circled section of FIGURE 1.

### Detailed Description of the Invention

The present invention is directed to a removable insert for a disc brake made from a higher strength carbon-carbon composite. The carbon-carbon composite insert is treated with antioxidant solution. Preferably, the carbon-carbon composite is vacuum pressure impregnated with antioxidant solution. With this approach the lug strength and the oxidation resistance can be simultaneously improved. The removable insert also allows for replacement if excess wear occurs.

In one embodiment, CARBENIX® 4000 carbon-carbon composite is treated with P-13K, P-39 or other high performance phosphoric acid based anti-oxidant solutions that are known in the art. The materials are then cured by a standard process. The inserts can then be tack bonded into a mating surface in the stator. Preferably the carbon-carbon composite insert is vacuum pressure impregnated with antioxidant solution.

**Oxidation treatments.** Methods of treating carbon-carbon composites with an antioxidant are known in the art. One such method is to impregnate the carbon-carbon composite with an aqueous solution comprising standard antioxidants. The antioxidant solution may be administered to the carbon-carbon composite by, for example, painting the solution onto the surface of the carbon-carbon composite. The carbon-carbon composites may also be sprayed or soaked with antioxidant solution. The carbon-carbon composite is then heated to high temperature under nitrogen. The antioxidant solution can also be heated before being applied to the carbon-carbon composite.

Any antioxidants that can be used to inhibit oxidation in carbon-carbon composites, that are generally known to those of skill in the art can be used with this invention. Antioxidants that can be used with this invention include phosphate coatings of Al, Zn, or Mn, that is brushed on the edges of the brake discs and then charred. Another class of anti-oxidant treatments for carbon and graphite materials, including carbon-carbon composites, is based on using compounds that form a stable complex with active sites on the carbon composite in order to prevent oxidation.

Halogen and organohalogen compounds have been used as oxidation inhibitors at temperatures of up to 900 °C. A concentrated aqueous solution of H₃PO₄ ZnO, A1(OH)₃, CuSO₄ and Cu(NO₃)₂ can also be used to inhibit oxidation at high temperatures. Similar antioxidants are described in U.S. Patent No. 4,837,073 to McAllister et al..

A further class of antioxidants that are especially preferred include phosphoric acid penetrants, which are coated on the carbon/carbon material. These antioxidants significantly improve the oxidative resistance of the carbon-carbon composite at the high end of the typical operating temperature range. These antioxidants are also effective in the presence of high concentrations of known oxidation catalysts, such as potassium acetate, a common constituent in aircraft runway deicers.

Such a phosphoric acid-based penetrant salt solution may contain the ions formed from one or more of the following: 10-80 wt% H₂O, 20-70 wt % H₃PO₄, 0-25 wt % MnHPO₄·1.6H₂O, 0-30 wt % Al(H₂PO₄)₃, 0-2 wt % B₂O₃, 0-10 wt % Zn₃ (PO₄)₂ and 0.1-25 wt % alkali metal mono-, di-, or tri-basic phosphate. Antioxidants suitable for use with this invention are described in U.S. Patent No. 6,455,159 to Walker et al..

US 5,759,622 and US 6,551,709 both to Stover discuss methods and materials for treating carbon-carbon composites with antioxidant. US 2,685,539 to Woodburn et al.; US 4,439,491 to Wilson et al., and US 4,837,073 to McAllister et al. also discuss methods and materials for treating carbon materials with antioxidant solutions.

**Vacuum impregnation.** The articles may be impregnated with antioxidant using any vacuum impregnation technique that is known in the art. Generally, vacuum impregnation involves first placing the article under a vacuum, then applying antioxidant to the surface of the article. Pressure is then re-applied, which forces the antioxidant into the pores of the article. Excess antioxidant is then wiped from the surface of the article.

Vacuum impregnation results in the pores of the article becoming filled with antioxidant, but does not necessarily result in a change in the size or shape of the article. Other methods of applying antioxidant to an article generally affect the surface of the canticle, and adversely affect the friction properties.

In one embodiment of the present invention, the carbon-carbon composites are placed into a vacuum chamber. The air is evacuated, opening fine paths within the carbon-carbon composite, which makes the pores receptive to filling with antioxidant. The antioxidant is then introduced onto the surface of the carbon-carbon composite. The chamber is then pressurized, which forces the antioxidant into the pores of the carbon-carbon composite. This is followed by rinsing to clear excess antioxidant from the external surface of the carbon-carbon composite, and removal from the chamber. The process can be done relatively quickly. Typical impregnation times are about 20-25 minutes.

The impregnation process does not alter the external surface, so carbon-carbon brake pads require no additional tooling or shaping after the process. Vacuum impregnation is effective in filling surface pores of the carbon-carbon composite as well as cracks and holes that penetrate the part.

**Carbon-carbon composites.** Any carbon carbon-carbon composites that are well known in the art can be used with this invention. Carbon-carbon composites are generally made of fibers, and carbonaceous polymers and/or pyrocarbon as the matrix. Carbon-carbon composites and methods of their manufacture are well known to those in the art. Carbon-carbon composites are described in Carbon-Carbon Materials and Composites, John D. Buckley and Dan D. Edie, Noyes Publications, 1993. The carbon-carbon composites of the present invention can be made with thermosetting resins as matrix precursors. These materials generally possess low densities 1.55-1.75 glcm³ and have well-distributed microporosity. Composites made with resins as the matrix generally exhibit high flexural strength, low toughness, and low thermal conductivity.

The carbon-carbon composites of the present invention can also be made with pitch as the matrix precursor. These materials, after densification, can exhibit densities in the range of 1.8-2.0 g/cm³ with some mesopores. The carbon-carbon composites of the present invention can also be made by chemical vapor deposition (CVD). This technique uses hydrocarbon gases, and the carbon-carbon composites that are produced possess intermediate densities, and have matrices with close porosities. Composites with pitch as the precursor, and the CVD-based composites, can be made with very high thermal conductivity (400-700 W/MK) in the fiber direction.

In one preferred embodiment, the carbon-carbon composites of the present invention are prepared from carbon preforms. Carbon preforms are made of carbon fibers, which can be formed from pre-oxidized polyacrylonitrile (PAN) fibers. The carbon fibers can be layered together to form a shape, such as a friction brake pad. The shape is heated and infiltrated with methane, or another pyrolyzable carbon source, to form the carbon-carbon composite. A carbon-carbon composite prepared in this manner is preferred, and will have a density in the range of about 1.6 g/cm³ to about 1.9 g/cm³. More highly preferred is a carbon-carbon composite with a density of approximately 1.75 g/cm³.

One highly preferred carbon-carbon composite is CARBENIX™ 4000. This carbon/carbon composite material is manufactured by Honeywell International, Inc. as an aircraft brake carbon/carbon composite friction material. CARBENIX™ 4000 is made of non-woven polyacrylonitrile precursor carbon fibers, densified with carbon utilizing chemical vapor deposition.

Another highly preferred carbon-carbon composite is CARBENIX™ 2400, also manufactured by Honeywell International, Inc. CARBENIX™ 2400 is an aircraft brake carbon/carbon composite friction material, consisting of pitch precursor carbon fibers, densified with carbonized phenolic resin and with carbon from chemical vapor deposition.

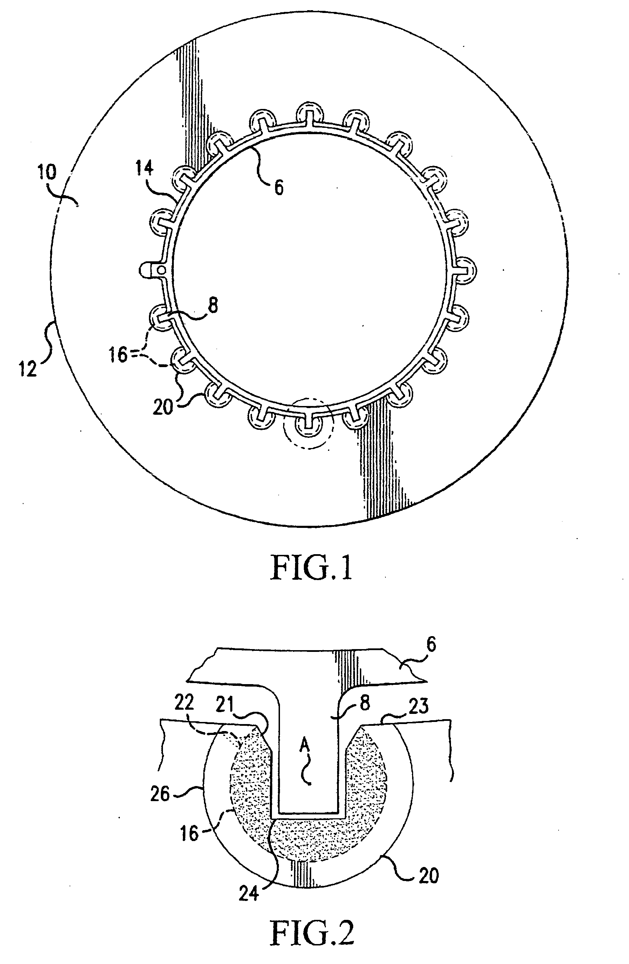

**Preferred embodiments.** Figure 1 illustrates an aircraft carbon-carbon composite brake disc in accordance with this invention. The brake disc **10** is generally annular in shape and includes an outer diameter circumference **12** and a central annular opening **14.** Located around the periphery of opening **14** is a plurality of slot openings or recesses for receiving brake disc annular drive inserts **20.**

The Recesses **16** of disc **10** are generally annular shaped slots extending radially outwardly from opening **14** of disc **10.** Annular drive inserts **20** couple a torque tube **6** with disc **10.** The torque tube is coupled with the axle of an aircraft (not shown).

Figure 2 illustrates torque tube **6** with radially extending short splines **8** which extend into openings **21** of the annular drive inserts **20.** Each annular drive insert **20** comprises a generally cylindrical body **22** which rotatably engages the surface of recess **16.** Body **22** is truncated at side **23** and provides opening **21** which extends diametrically into cylindrical body **22.** Generally, the insert-to-stator interface may be cylindrical but is not necessarily cylindrical, for example rectangular or oval interfaces can be used. Each Body **22** comprises a removable carbon-carbon composite insert that is treated with antioxidant. Opening **21** extends past the center of revolution A of body **22** and terminates in flat surface **24** (which can have alternatively a nonflat shape) located between the center of revolution A and the outer surface of cylindrical body **22.** At opposite axial ends of cylindrical body **22** are radially extending flanges **26** which engage opposite sides of disc **10** to retain axially drive insert **20** within annular slot **16**

The preferred embodiments given above and shown in the Figures are examples of the invention, and are not intended to define the full scope of the invention. One skilled in the art would recognize many variations that would also be encompassed by the claims.

## Claims

1. A carbon brake disc (10) generally annular in shape comprising:
an outer diameter circumference (12) and a central annular opening (14);
a plurality of slot openings or recesses (16) for receiving brake disc annular drive inserts (20), the slot openings or recesses being located around the periphery of the central annular opening (14); and
annular drive inserts (20) that are coupled with a torque tube (6) with the brake disc (10);
**characterised in that** the inserts are formed of carbon-carbon composite material that has been impregnated with an antioxidant.

2. The brake disc of claim 1, wherein the brake disc (10) comprises a carbon/carbon composite.

3. The brake disc of claim 1, wherein the antioxidant comprises phosphoric acid.

4. The brake disc of claim 1, wherein the annular drive inserts (20) are treated by vacuum pressure impregnation with an antioxidant.

5. The brake disc of claim 4, wherein the antioxidant comprises phosphoric acid.

6. A method of protecting a carbon-carbon composite annular drive insert (20) for a brake disc according to claims 1 or 2 (10) comprising:
treating the annular drive insert with an antioxidant.

7. The method of claim 6, wherein the antioxidant comprises phosphoric acid.

8. The method of claim 6, wherein the treatment is done by vacuum pressure impregnation.

## Patentansprüche

1. Allgemein ringförmige Kohlenstoffbremsscheibe (10), umfassend:
einen Außendurchmesserumfang (12) und eine mittlere ringförmige Öffnung (14);
mehrere Schlitzöffnungen oder Aussparungen (16) zur Aufnahme von ringförmigen Bremsscheibenantriebseinsätzen (20), wobei die Schlitzöffnungen oder Aussparungen um den Umfang der mittleren ringförmigen Öffnung (14) herum angeordnet sind; und
ringförmige Antriebseinsätze (20), die mit einem Torsionsrohr (6) mit der Bremsscheibe (10) verbunden sind;
**dadurch gekennzeichnet, dass** die Einsätze aus Kohlenstoff-Kohlenstoff-Verbundmaterial, das mit einem Antioxidans imprägniert worden ist, hergestellt sind.

2. Bremsscheibe nach Anspruch 1, wobei die Bremsscheibe (10) einen Kohlenstoff/Kohlenstoff-Verbundstoff umfasst.

3. Bremsscheibe nach Anspruch 1, wobei das Antioxidans Phosphorsäure umfasst.

4. Bremsscheibe nach Anspruch 1, wobei die ringförmigen Antriebseinsätze (20) durch Vakuumdruckimprägnierung mit einem Antioxidans behandelt sind.

5. Bremsscheibe nach Anspruch 4, wobei das Antioxidans Phosphorsäure umfasst.

6. Verfahren zum Schützen eines ringförmigen Antriebseinsatzes (20) aus Kohlenstoff-Kohlenstoff-Verbundstoff für eine Bremsscheibe (10) nach Anspruch 1 oder 2, das Behandeln des ringförmigen Antriebseinsatzes mit einem Antioxidans umfasst.

7. Verfahren nach Anspruch 6, wobei das Antioxidans Phosphorsäure umfasst.

8. Verfahren nach Anspruch 6, wobei die Behandlung durch Vakuumdruckimprägnierung erfolgt.

## Revendications

1. Disque de frein en carbone (10) ayant une forme généralement annulaire, comprenant :
une circonférence de diamètre extérieur (12) et une ouverture centrale annulaire (14) ;
une pluralité d'encoches ou de découpes (16) destinées à accueillir des inserts annulaires d'entraînement du disque de frein (20), les encoches ou découpes étant situées autour de la périphérie de l'ouverture centrale annulaire (14); et
des inserts annulaires d'entraînement (20) qui sont accouplés avec un tube de poussée (6) et avec le disque de frein (10) ;
**caractérisé en ce que** les inserts sont en matériau composite de type carbone/carbone qui a été imprégné d'un antioxydant.

2. Disque de frein selon la revendication 1, ledit disque de frein (10) étant en matériau composite de type carbone/carbone.

3. Disque de frein selon la revendication 1, ledit antioxydant comprenant l'acide phosphorique.

4. Disque de frein selon la revendication 1, lesdits inserts annulaires d'entraînement (20) étant traités avec un antioxydant par un procédé d'imprégnation sous vide suivi d'une pressurisation.

5. Disque de frein selon la revendication 4, ledit produit antioxydant comprenant l'acide phosphorique.

6. Procédé de protection d'un insert annulaire d'entraînement en matériau composite de type carbone/carbone (20) destiné à un disque de frein (10) selon les revendications 1 ou 2 ,comprenant :
le traitement dudit insert annulaire d'entraînement avec un antioxydant.

7. Procédé selon la revendication 6, ledit antioxydant comprenant l'acide phosphorique.

8. Procédé selon la revendication 6, ledit traitement étant appliqué par un procédé d'imprégnation sous vide suivi d'une pressurisation.
